# EUROPEAN PATENT APPLICATION

(11) **EP 4 779 505 A1**
(43) Date of publication of application: **22.07.2026**
(21) Application number: 25152889.9
(22) Date of filing: 20.01.2025
(51) Int. Cl.: G06F 30/13, G06F 30/23, G06F 119/14

(54) **METHOD FOR AUTOMATED STRUCTURAL CALCULATIONS FOR BUILDINGS**

(71) Applicant: Poji AB, 652 24 Karlstad (SE)
(72) Inventor: EKHAGEN, Linus, 653 38 KARLSTAD (SE); HULTHE, Per-Olof, 652 29 KARLSTAD (SE)
(74) Representative: Bjerkén Hynell KB

(57) **Abstract**

This invention relates to a method of computer-aided design of construction comprising the steps of:
a) Input of building system specific data for a planned construction into a design program
b) Input of project-specific data regarding building geometry into the design program,
c) Calculation and production of visual presentation of building frame in the design program,
d) Iteration of step c) until a desired target image is achieved for the frame material of said building frame,
e) production of frame materials for the building frame and cutting lists for the frame in the design program,
wherein automation may be achieved.

## Description

### TECHNICAL FIELD

The present invention relates to a method for automated structural calculations for buildings may improve regarding efficiency and/or quality.

### TECHNICAL BACKGROUND

It has long been known to try to minimize hazards and costs regarding building designs, including the phase of structural calculations for buildings, especially by use of automated processing which is a complex challenge.

From the article "Automated Compliance Checking System for Structural Design Codes in a BIM Environment", by Wonhui Gohe et al, published in KSCE Journal of Civil Engineering (2024) 28(10), p. 4175-4189, there is known a teaching providing basic steps for automation of the phase of structural calculations for buildings, but the teaching present some short comings, e.g. that structural design checks in this system are embedded directly into the IFC-file format, that the setup necessitates significant manual data entry for compliance checks, and that it does not consider all relevant loads.

In a similar manner as the above article also US 8,280,688, US 9,858,429 CN112733246, CN114266100 and CN113609567 provide teachings that present similar short comings.

### SUMMARY OF THE INVENTION

It is an object of the present invention to eliminate or at least minimize the above-mentioned short comings, which is achieved by a method according to claim 1.

Thanks to the invention there is provided an innovative method/workflow that may facilitate comprehensive design and optimization of building structures that by means of systematic computer-aided iterations may provide minimal manual intervention and/or optimize material usage and/or ensure compliance with building codes and/or integrate climatic databases for wind loads (possibly also snow loads) and/or enhance the overall speed of the design process, wherein preferably manual intervention is limited solely to initial data entry. The method may result in a highly efficient, reliable, and compliant structural design workflow, which significantly may improve the way buildings are conceived and constructed.

Further the method may minimize human errors and accelerates project timelines. Material optimization may be achieved by means of sophisticated algorithms that determine the most efficient use of resources, preferably enabling reducing costs and environmental impact. Additionally, the method preferably incorporates rigorous code compliance checks in terms of structural design checks, ensuring that all designs comply with relevant safety and regulatory standards, preferably by automated integration with various engineering tools and libraries, e.g. in the form of databases. Suitably, a Python-based code engine is used, resulting in a Python-based workflow.

Preferably the output generation is in a standardized format, which may provide consistent and easily interpretable results that facilitate efficient communication among stakeholders and streamline the approval process.

### BRIEF FIGURE DESCRIPTION

In the following the invention will be described in more detail with reference to the accompanying drawings, in which:
Fig. 1 shows a first part of a flowchart presenting different steps of a preferred embodiment according to the invention,
Fig. 2 shows a second part of a flowchart presenting different steps of a preferred embodiment according to the invention,
Fig. 3 shows a third and final part of a flowchart presenting different steps of a preferred embodiment according to the invention,
Fig. 4 shows the difference between balloon and platform framing,
Fig. 5, presents columns for the modules of an example building created by use of the method of the invention,
Fig. 6, presents columns for the openings of the building
Fig. 7, presents an input csv-file with modular parameter data of the building
Fig. 8, presents a csv-file regarding the roof geometry of the building
Fig. 9, presents a csv-file regarding the interior corridor running along the length of the building.
Fig. 10, presents the geometry of the present building,
Fig. 11, presents the roof-supporting walls of the present building,
Fig. 12, presents the resulting characteristic line loads due to snow,
Fig. 13, presents calculated form factors for walls at level 1,
Fig. 14, presents characteristic wind pressure as a function of height
Fig. 15, presents a mapped to a color to display the utilization ratio within a 3D-model,
Fig. 16, presents a DXF-file showing the optimized wall framing, and
Figure 17 shows a DXF-file presenting the foundation loads

### DETAILED DESCRIPTION

In order to clarify some aspects of the invention the method according to the invention, in the following will be described in connection with the design and optimization of a five-story, volumetric modular building, showcasing the efficiency of a workflow according to the invention.

It is assumed that the contractor desires both sustainability and structural integrity, which may result in choosing a construction using a timber frame system, which may well fulfil both desires.

In the example the architectural layout features a longitudinal design, with modules positioned on either side of a central corridor. The building has a flat roof, supported by beams that are perpendicular to the building's length. The project is assumed to be placed in Sweden where Eurocode and EKS 11 regulations applies, which govern structural safety, material specifications, and construction practices. By integrating Eurocode and EKS 11 standards into the automated workflow, it may be ensured that all aspects of the building design meet or exceed the required safety and performance criteria.

The example is intended to show the capability of the method, preferably using Python-based code engine, to manage complex architectural and structural requirements with precision and efficiency. By automating the structural design and optimization processes, the workflow may reduce manual effort, accelerate project timelines, and deliver standardized, compliant, and optimized building solutions.

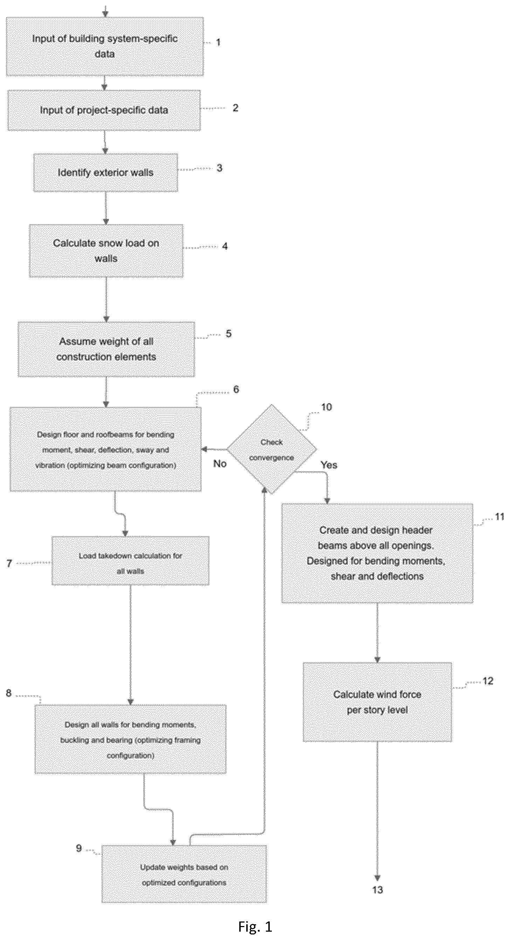

In Figure 1 there is shown a first part 1-10 of a flowchart presenting different steps of a preferred embodiment according to the invention, wherein steps 6-10 are included in a first loop related to calculations of vertical loads.

The first step 1 of the first part 1-10 regards Input of Building System-Specific Data to the software of the system, which input is exemplified in Table 1 through Table 4 below, i.e. showing the input layer data for the construction elements walls, floors and ceilings of the building.

**Table 1: Exterior wall layer data**

| Construction part | Material | Dimension (mm) | Density (kg/m3) | Weight (kg/m2) |
|---|---|---|---|---|
| Gypsum | Norgips Standard (interior) | 12 | 720 | 8.6 |
| Sheathing | None | 0 | 0 | 0.0 |
| Studs | GL30h | 45x195 | 480 | 14.0 |
| Insulation | Stone wool 80 kg/m3 | 195 | 80 | 13.3 |
| Sheathing | Plywood E30 | 10 | 500 | 5.0 |
| Facade | | | | 11.2 |
| Installations | | | | 0.0 |
| | | | Total | 52.1 |

**Table 2: Interior wall layer data**

| Construction part | Material | Dimension (mm) | Density (kgtm3) | Weight (kg/m2) |
|---|---|---|---|---|
| Gypsum | Norgips OF 15 (fire) | 30 | 806 | 24.2 |
| Sheathing | None | 0 | 0 | 0.0 |
| Studs | C24 | 45x95 | 420 | 6.0 |
| Insulation | Glass wool | 95 | 19 | 1.5 |
| Sheathing | Plywood E30 | 12 | 500 | 6.0 |
| Installations | | | | 0.0 |
| | | | Total | 37.7 |

**Table 3: Floor layer data**

| Construction part | Material | Dimension (mm) | Density (kg/m3) | Weight (kg/m2) |
|---|---|---|---|---|
| Parquette | Parquette oak | 15 | 554 | 8.3 |
| Gypsum | Norgips 13 (floor) | 13 | 1077 | 14.0 |
| Topping | None | 0 | 0 | 0 |
| Sheathing | Particleboard P4 > (13-20 mm) | 20 | 750 | 15.0 |
| Beams | C24 | 45x245 | 420 | 15.4 |
| Insulation | Stone wool 29 kg/m3 | 245 | 29 | 6.0 |
| Sheathing | Plywood E70 | 12 | 500 | 6.0 |
| Installations | | | | 15.0 |
| | | | Total | 79.8 |

**Table 4: Ceiling layer data**

| Construction part | Material | Dimension (mm) | Density (kg/m3) | Weight (kg/m2) |
|---|---|---|---|---|
| Sheathing | None | 0 | 0 | 0 |
| Beams | C24 | 45x145 | 420 | 9.0 |
| Insulation | Stone wool 80 kg/m3 | 145 | 80 | 10 |
| Sheathing | Plywood E30 | 30 | 500 | 15 |
| Gypsum | None | 0 | 0 | 0 |
| Installations | | | | 0 |
| | | | Total | 42.0 |

Beyond the layer-specific data, shown in the tables above, the workflow requires the input of additional building system parameters to fully define the structural and architectural characteristics of the building. These inputs may encompass construction types, framing details, geometric dimensions, sheathing specifications, framing options, rail heights, partition details, and fastener information, see Table 5.

**Table 5: Additional building system date input**

| | | |
|---|---|---|
| Ceiling type | Platform | |
| Floor type | Platform | |
| Ceiling circumferential beam | 90x145 | GL30c |
| Floor circumferential beam | 90x245 | GL30c |
| Floor beams | 45x245 | C24 |
| Roof beams | 45x145 | C24 |
| interior wall studs | 45x95 | C24 |
| Exterior wall studs | 45x195 | GL30h |
| Total module height | 3.1 | |
| Sheathing widths wall | 1200 | |
| Sheathing widths floor | 1200 | |
| Sheathing widths roof | 1200 | |
| Exterior wall s-distance options | [900, 600, 450, 300] | |
| Exterior wall n-studs options | [1] | |
| interior wall s-distance options | [900, 600, 450, 300] | |
| interior wall n-studs options | [1] | |
| Floor beam s-distance options | [900, 600, 450, 300] | |
| Floor beam n-beams options | [1] | |
| Roof beam s-distance options | [900, 600, 450, 300] | |
| Roof beam n-beams options | [1] | |
| Top rail height | 90 | C24 |
| Bottom rail height | 45 | C24 |
| Partition watts | Partition watts <= 1 kN/m | |
| Location | Type | s-options |
| Exterior walls gypsum | Do not account for | 300 |
| interior walls gypsum | Do not account for | 250 |
| Exterior walls sheathing | Nait 2.8 × 65 mm (el/varmförzinkad) | [150, 140, 130, 120, 110, 100, 90, 80, 70, 60, 50, 40] |
| interior walls sheathing | Nail 2.8 × 75 (el/varmförzinkad) | [150, 140, 130, 120, 110, 100, 90, 80, 70, 60, 50, 40] |

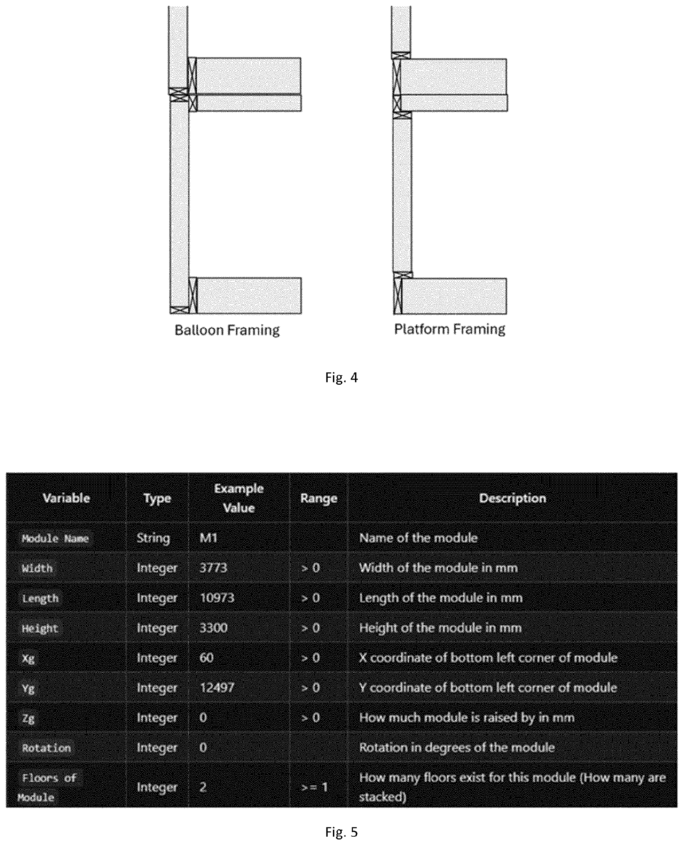

The construction type for both ceiling and floor systems can be selected between Platform and Balloon systems, see Fig. 4, providing flexibility in the building's structural approach. This selection influences the load distribution and structural integrity of the building.

The second step 2 of the first part 1-10 regards Input of Project-Specific Data, wherein building geometry may be structured as shown in the following csv-file, where rows not starting with a tab are volumetric modules. Consequent tab-started rows correspond to openings in the module.

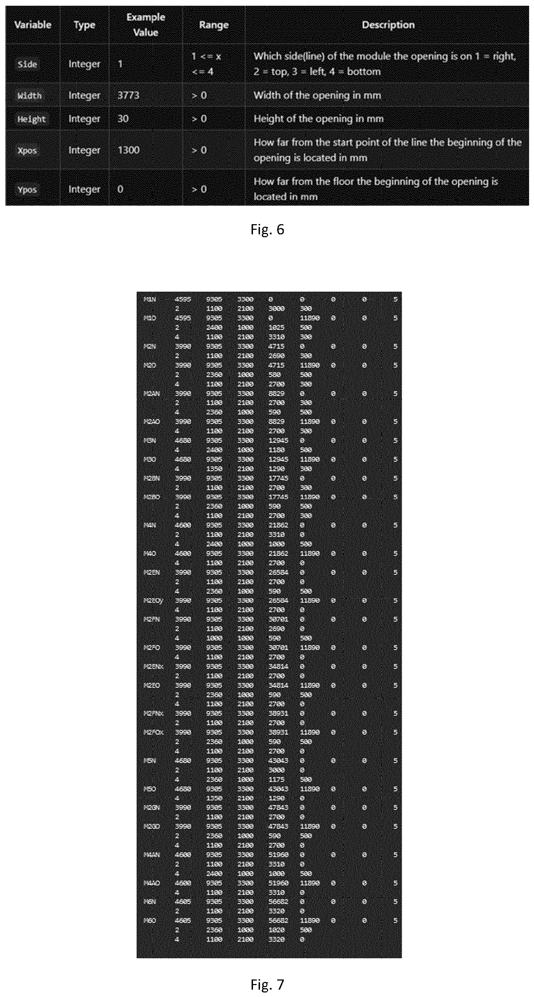

Columns for the modules of the building are presented in Fig 5, showing input columns for volumetric module geometry. Columns for the openings of the building are presented in Fig. 6, showing continuation on input columns for openings in the volumetric modules.

In Fig. 7 there is shown an input csv-file with modular parameter data of the building.

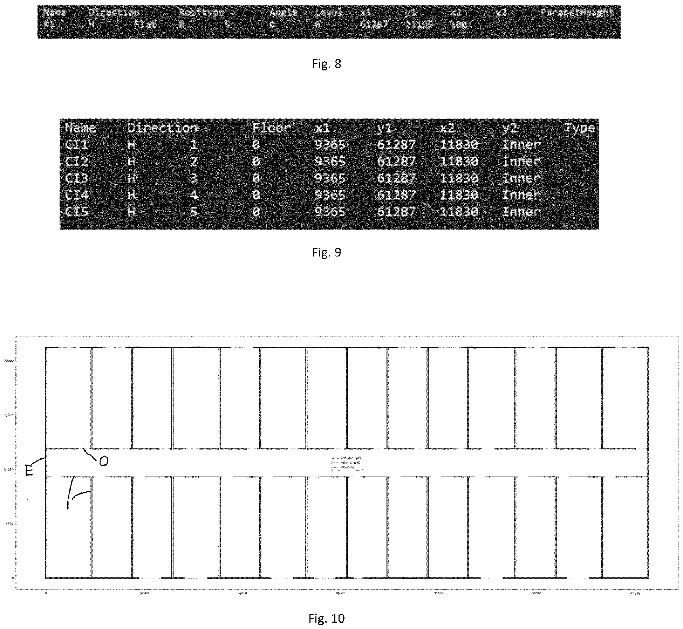

In Fig. 8 there is shown a csv-file regarding the roof geometry of the building, defining the geometric properties of the roof geometry.

In Fig. 9 there is shown a csv-file regarding the interior corridor running along the length of the building.

Below there are shown additional site-specific data of the building that are sent as input to the software:

| | |
|---|---|
| Podium height | 0 m (building on ground) |
| Latitude | 59,37 |
| Longitude | 13,5 Karlstad, Sweden |
| Diaphragm option | Flexible |
| Terrain type | II |
| Roof weight | 2 kN/m² |

Thereafter step 3 may be performed, i.e. having the software interpreting the modular data supplied in steps 1 and 2 to generate the building's geometry, i.a. regarding the exterior walls. In Fig 10 the geometry of the present building is presented, wherein exterior walls are shown as thick lines (also shown as ref E), thinner lines (also shown as ref T) denotes interior walls, and grey lines (also shown as ref O) represents openings.

In accordance with the invention automatic recognition of the exterior walls preferably may be completed through an image-based flood-fill method.

The software may preferably employ an image-based flood-fill algorithm using a 2D NumPy array as a canvas, to identify exterior walls.

An exemplary process of step 3 may involve the following four main substeps:
A. Drawing Walls on the Canvas
   - For each floor, all wall segments, including those from modules and interior corridors, are plotted onto a 2D NumPy array.
   - Walls are represented by setting array values to 1, while the background remains 0.
   - The array indices correspond to (x, y) coordinates, with adjustments for orientation.
B. Flood Fill from the Exterior
   - A flood fill operation starts from the top-left corner (0,0), assumed to be outside the building footprint.
   - This fills all connected background areas with a value of 2, distinguishing exterior regions from the interior.
C. Identifying Exterior Walls
   - The software examines each wall segment by sampling points adjacent to the walls.
   - If any sampled point lies in the flood-filled exterior region (value 2), the wall is marked as exterior.
D. Tagging Exterior Walls in the DataFrame
   - The identified exterior walls are then flagged in the original DataFrame by matching their start and end points within a small tolerance.

In step 4 there will be performed a collection of climate loads, e.g. regarding snow as shown in Fig. 1. It is a great advantage with the invention that the process/software includes the ability to retrieve climate-related load data by utilizing the building's geographical coordinates. By inputting the latitude and longitude, the system may interfaces with public APIs to obtain essential climate parameters, e.g. snow, wind, seismic, necessary for structural design and optimization.

For the present building the software/code automatically may retrieve the following climatic data for corresponding coordinates:
Basic Wind Speed: 23 m/s
Snow Ground Load: 2.5 kN/m²
Seismic Loads: Not extracted, as Sweden is classified outside seismic activity zones.

Thereafter in step 4 there is performed an Automated Load Calculation, as presented below.

Firstly basic ground snow load (if applicable), roof geometry and wall geometry are used to calculate the characteristic line loads acting on load bearing walls. The program will automatically detect roof-supporting walls and their tributary length.

In a so called High level methodology the five basic steps below may preferably be used:
1. Identify "top-level" walls
   - Grouping by floor level: The code looks at all walls and selects only those on the highest floor level (for each set of coordinates). These top-level walls are the ones that could directly receive snow load from the roof above them.
2. Determine each wall's orientation and check for parapets or higher adjacent walls
   - External walls / Parapet height: If a wall is flagged as external, the potential snow drift height is initially set equal to a parapet height.
   - Check for "nearby lines" (adjacent or higher walls): If a higher wall is found close by on the same floor, that suggests the possibility of snow drifting between the two walls. In that case, the drift height is derived from the difference in floor elevations.
3. Compute snow-drift geometry and form factors
   - Roof geometry & distance: For each wall with a nonzero drift height, the code looks for:
      ∘ The "upper roof horizontal length upstream of the drift.
      ∘ The "lower roof horizontal length downstream of the drift.
   - Wind-based drift form factor and roof sliding form factor from the Eurocode approach.
   - Snowdrift zone: A geometric zone or region is defined (in plan view) where the drift will accumulate, extending a certain distance from the wall, thus affecting walls some distance from the snowdrift maximum.
4. Distribute the drift load along walls
   - Interpolating form factors along each span: The code methodically identifies each wall segment within the drift region and calculates how much of the drift load falls on each segment. It does this by:
      1. Finding midpoints between walls or up to roof edges.
      2. Linearly interpolating the drift form factor from the drift's high point down to the normal roof form factor.
      3. Determining a "line load" for each segment of the wall (in kN/m) by multiplying the form factor by the roof snow load, exposure/thermal factors, and the half-distances between walls.
5. Combine drift loads with uniform (balanced) snow loads
   - Check walls not under any drift: If a wall is not within a snowdrift zone, it simply receives a uniform (balanced) snow load.
   - Add it all together: The code merges the drift load and the uniform load into a single "Snow total load (kN/m)" for each wall on that top level.

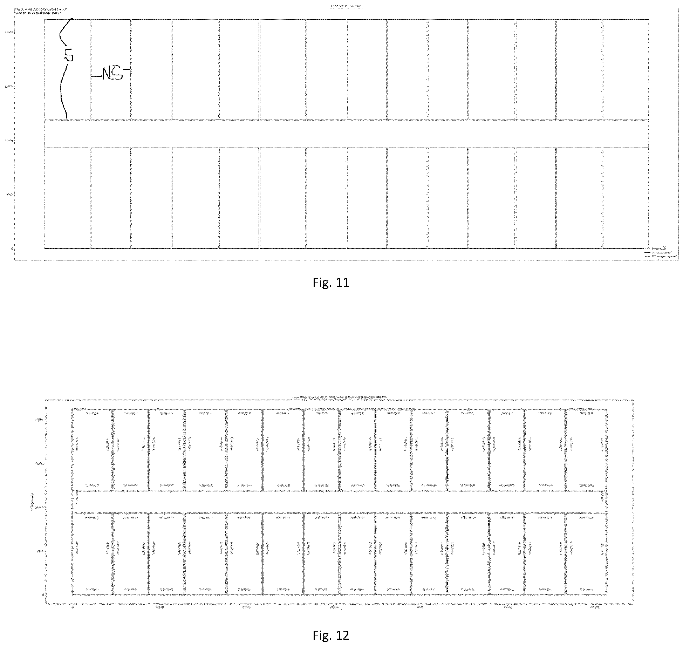

In Fig. 11 the roof-supporting walls are shown, marked as thick lines (also shown as ref S) and non-roof-supporting walls as thick lines (also shown as ref NS) and in Fig. 12 the resulting characteristic line loads due to snow are shown.

Thereafter also wind loads may automatically calculated through geometric calculations on wall and roof data.

In a so called High level methodology the ten basic steps below may preferably be used for the walls:
1. Wall Height Calculation
   - The script determines the building heights by filtering the DataFrame for rows with matching x and y coordinates.
   - It then computes the height based on the z-coordinates of those matching walls.
2. Depth and Opposite Walls
   - For each wall, the code identifies walls that lie in the *opposite* wind direction using a bounding-box approach.
   - It determines how far the opposite walls are by calculating a minimum and a maximum depth in the direction perpendicular to the wall.
3. Wind Direction Determination
   - A "normal angle" is computed for each wall.
   - This angle is then mapped to a cardinal direction (North, South, East, or West).
4. h/d-Ratio and Form Factor Interpolation
   - Given the wall's height and the minimum depth, the script calculates the ratio h/d.
   - This ratio is used to *interpolate* the form factors (Zones A-E) based on Table 7.1 from EN 1991-1-4.
5. Assigning Form Factors
   - For the windward wall, the script assigns the relevant form factor (for example, zone D corresponds to windward values).
   - Opposite walls receive "leeward" form factors (zone E values), unless a stricter (smaller) value is already set.
6. Global h/d Tracking
   - Throughout the process, the script also tracks the maximum h/d ratio for North-South and East-West directions. This can inform whether the building geometry allows for any wind load reductions.
7. Identify Each Wall's Floor & Direction
   - Each wall is tagged with a wind direction ("North", "South", etc.), as determined by the form-factor script.
8. Integrate Pressure over Wall Height
   - The integrates a wind pressure function along its height to distribute loads to the walls corresponding upper and lower diaphragms.
9. Multiply by Form Factor and Add to Floor Forces
   - The result of each half-integration is multiplied by:
   - Length * form factor
   - Then added to the total wind load for the relevant floor(s).
10. Apply Slenderness Multiplier
   Finally, the total directional forces (North, South, East, West) are scaled by a factor depending on the building's global h/d- ratio.

Thereafter the seven steps below may preferably be used for the walls.
- Retrieve geometry (length/width, parapet height, slope angle, etc.).
- Compute the *effective wind height*-the physical roof height plus any slope-height contribution.
- Calculate the wind pressure.
- Calculate zone areas and the corresponding form factors from EN 1991-1-4
- Combine area × form factor × wind pressure for each zone.
- Sum these partial forces into four global wind directions:
- Update each direction's total force by adding the roof's contribution at that floor/diaphragm level.

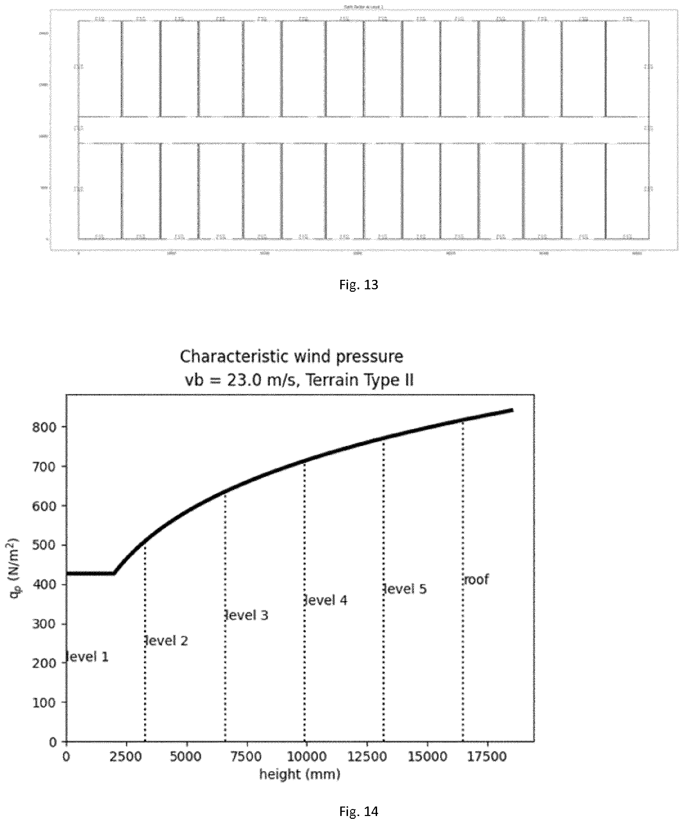

In Fig 13 calculated form factors for walls at level 1 are shown and in Fig. 14 there is shown characteristic wind pressure as a function of height for basic wind speed of 23 m/s and terrain type II.

For the building the calculated wind force per story level in the two main directions, are as shown in table 6 below.

| Direction | Level 1 | Level 2 | Level 3 | Level 4 | Level 5 | Roof |
|---|---|---|---|---|---|---|
| North/South | 44.4 kN | 105.1 kN | 131.7 kN | 148.2 kN | 160.3 kN | 96.0 kN |
| East/West | 12.8 kN | 30.2 kN | 37.9 kN | 42.6 kN | 46.9 kN | 28.4 kN |

Due to possible sway imperfections geometric imperfections in the structure may possibly be considered, in addition to lateral loads in the form of wind loads, and if so it will require load takedown prior to calculation.

Based on an exemplary method found in Eurocode that may be performed by:
1. For each floor level:
   ▪ Calculate a global imperfection factor based on structure height and number of walls
   ▪ Calculate equivalent horizontal force in the relevant load combinations by multiplying the imperfection factor with the corresponding vertical load.
   ▪ Combine with list of wind loads to get total lateral load per floor level.

Next, step 5 follows where assumed deadload for all load carrying construction parts, e.g. walls, floors, ceilings, are defined. This is preferably achieved by using a first guess that is conservative (worst case configuration - lowest centre distance between studs or thickest dimensions).

Next, step 6 follows where optimum configuration for floor and ceiling beams are obtained.

Next, step 7 follows where load takedown for all walls are obtained.

Next, step 8 follows where used to choose the optimum configuration for all walls,

Next, step 9 follows where the deadload of each construction element based on optimized configuration is adjusted.

Thereafter, in step 10 there is performed a check if the latest load takedown has resulted in any changes in relation to the previous iteration, if yes go to step 6 and perform a new iteration. If not, the first iteration loop 6-10 has been successfully finalized and the software will then exit the first loop 6-10 and go to step 11.

Thanks to the inputs provided in steps 1 and 2, each subsequent iteration within the vertical load takedown process utilizes updated input data reflecting changes in floor, ceiling, and wall configurations. Specifically, the method iterates through predefined options for beam center distances (e.g., 900 mm, 600 mm, 450 mm, and 300 mm) and stud center distances (e.g., 900 mm, 600 mm, and 300 mm), selecting configurations that optimize structural parameters such as bending, buckling, bearing, deflection, and vibration. Each iteration adjusts the deadloads based on the selected configurations, updating the corresponding data for all construction parts. The loop continues until there are no further changes in deadloads across all walls, typically requiring three to five iterations due to the limited set of predefined configuration options, i.e. preferably requiring less than ten iterations. This automated iterative process ensures rapid optimization, achieving utilization rates close to 100%, and significantly reduces the time required for structural calculations from hours or days to mere seconds.

Accordingly, the method automates the structural design verification of floor and ceiling beams by:
1. Extracting Material and Geometric Properties:
   Utilizing predefined tables to obtain necessary material strengths and moduli of elasticity.
2. Iterative Design Process:
   Systematically evaluating various beam configurations against load combinations to ensure structural adequacy.
3. Comprehensive Verification:
   All critical design criteria (bending, shear, deflection, vibration, and sway) are assessed per EN 1995-1-1, ensuring compliance
4. Optimized Beam Selection:
   Selecting the most efficient beam configuration that satisfies all utilization ratios, thereby ensuring safety and material efficiency.

As seen in table 7 below, the only change that occurred is in between iteration 1 and 2 since the design of floors and ceilings are independent on other construction. Walls on the other hand depends on the structure above - which might require more iterations.

| Iteration | Maximum utilization factor | | Floor centre distances | | | Ceiling centre distances | |
|---|---|---|---|---|---|---|---|
| | Floor | Ceiling | s.900 | s.600 | s.450 | s.600 | s.450 |
| 1 | 99.8% | 90.5% | 80 | 30 | 30 | 80 | 60 |
| 2, 3... | 98.8% | 87.5% | 80 | 40 | 20 | 80 | 60 |

For 10 of the 140 floors, it is possible to use a larger centre distance in the second iterations. These calculations are highly dependent on provided available centre distances - with more available configurations each floor and or ceiling can be more optimized.

The script for load takedowns preferably automates the calculation of vertical loads on the walls of the building through:
1. Geometric Configuration:
   ∘ Identifies and filters walls based on their spatial coordinates and floor levels to determine load-bearing relationships.
2. Occupancy and Usage:
   ∘ Differentiates load assignments based on module occupancy statuses, corridor usage, and specific area functions (e.g., residential, offices, retail spaces).
3. Structural Components:
   ∘ Accounts for various structural elements including floors, ceilings, parapets, and walls above the current segment.
4. Load Types:
   ∘ Calculates different load types:
      ▪ Dead Loads: Permanent/static loads from structural elements.
      ▪ Live Loads: Variable loads based on occupancy and usage.
      ▪ Snow Loads: Environmental loads from snow accumulation.
5. Load Combinations and Reductions:
   ∘ Applies engineering standards to combine and reduce loads appropriately, ensuring safety and compliance with design codes.
6. Data Integration:
   ∘ Seamlessly updates the walls DataFrame with calculated loads, facilitating further structural analysis and design verification.

Table 8 below shows the variation of total deadload on the walls on the bottom floor. Four iterations were needed since the total deadload is equal in iteration 3 and 4. The largest change is between iteration 1 and 2, where the total deadload is reduced by close to 7 %.

| Iteration | Total deadload (kN) |
|---|---|
| 1 | 13315 |
| 2 | 12448 |
| 3 | 12432 |

When the loads on a wall have been calculated, the responsibility of another function is to choose the optimum wall configuration. This is preferably completed through the following process:
A. Structural Calculations
   1. Bending Resistance:
   2. Axial Buckling:
   3. Bearing Capacity:
B. Wall Configuration Selection
   1. Wind Pressure and Form Factor:
      ∘ Wind Pressure (q):
         Calculated based on basic wind velocity, terrain type, and wall height.
      ∘ Form Factor:
         Set to 1.4 for exterior walls and 0.3 for interior walls.
   2. Beam Configuration Iteration:
      ∘ Spacing and Number of Studs:
         Iterates through predefined spacings and number of studs
      ∘ Load Combinations:
         Applies load factors to dead loads, live loads, and snow loads to simulate ultimate limit state (ULS) conditions.
   3. Structural Verification:
      ∘ Bending, axial buckling, and bearing checks are carried out by iterating through predefined stud spacing and counts, selecting the first configuration that yields utilization ≤ 1."
   4. Configuration Acceptance:
      ∘ Criteria Satisfaction:
         Selects the first beam configuration that meets all structural criteria, thereby optimizing the design for safety and material efficiency.
   5. Data Update:
      ∘ Recording Results:
         Updates the walls with the chosen configuration, utilization factor, and identifying the governing dimensioning criterion.

In table 1, below length of different wall configurations between iterations are shown.

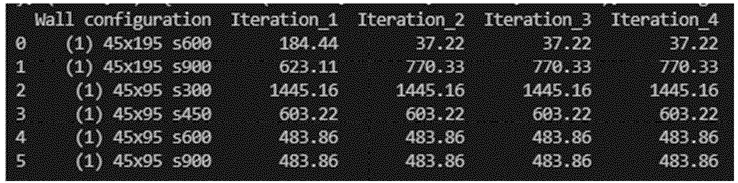

As the table 9 shows - the script manages to change a lot of walls from centre distance 600 mm to 900 mm between iteration 1 and 2. Remaining iterations are unchanged.

In table 10 below, there are shown example calculation for a wall, showcasing the process of optimizing the configurations based on available options.

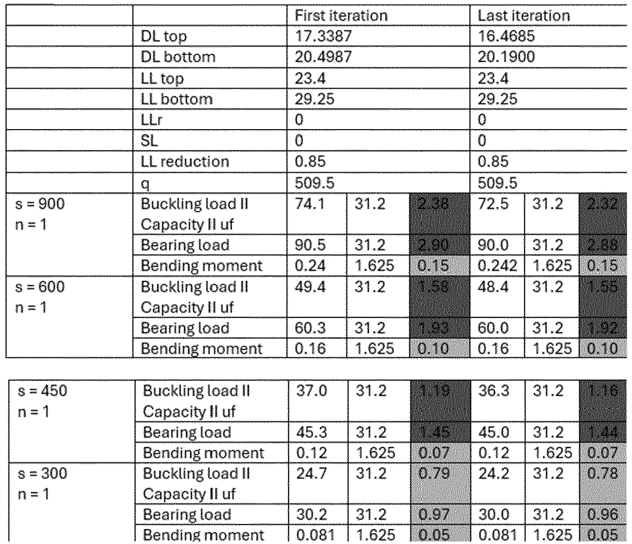

Table 10 shows an example of a wall on the first floor where the optimum stud configuration is found. The first and last iterations are shown to display the slight difference in deadload due to deadlcads being updated iteratively. First, line loads and geometric data for the wall is extracted. Then, a loop over available configurations is done until all design checks (buckling, bending and bearing) shows utilization ratios below 1.00. In this example, all utilization ratios are below 1.00 for a configuration of single studs placed 300 mm apart, and the dimensioning criteria is the bearing pressure on the sole plate. Overall utilization ratio is 0.96 in the last iteration.

In step 11, the load calculations derived from the initial iterative loop are utilized to determine the loads directly above all openings in the building, such as windows and doors. By analyzing the width of each opening, the method may calculate the load on header beams necessary to support the loads above. The software interfaces with a library of predefined header beams, including options such as 45x95 mm and 45x195 mm beams, as well as various glulam beams. This library, e.g. maintained in an Excel spreadsheet, accessible from the script, may allow for updates as needed. For each opening, the system performs structural checks for bending, shear, and deflection to calculate the utilization ratio of each header beam type. The software selects the minimum required header beam that achieves a utilization ratio closest to 100%.

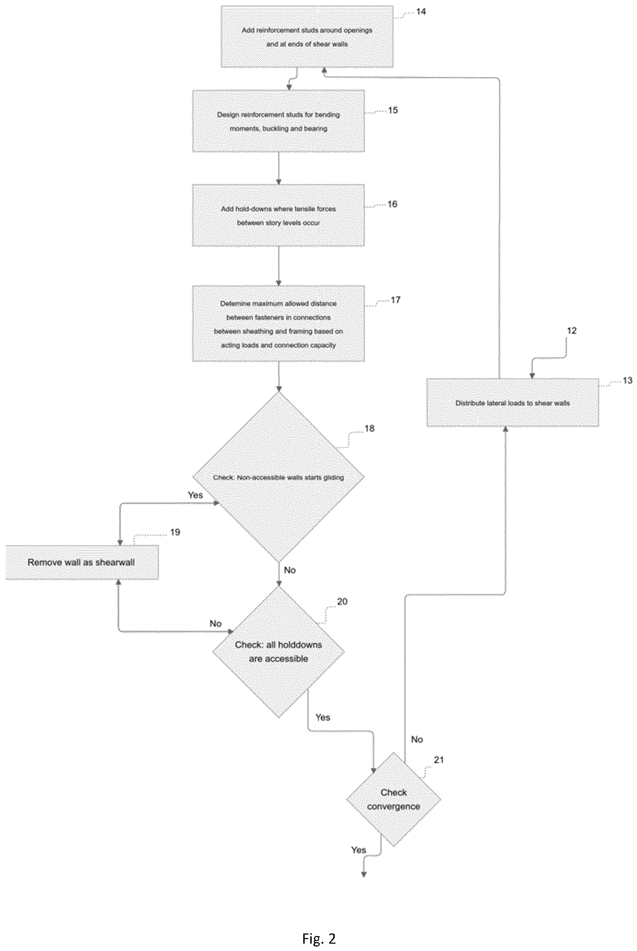

Horizontal load distributions are calculated based on a second iterative process basically as presented in steps 12-21 in Figs. 1 and 2. The method does not rely on a static assumption of which walls are laterally load-bearing (shearwalls). In brief it may be described as shown below:
1. Assume all walls being allowed to resist lateral loads and assume a stiffness of all walls
2. Distribute lateral loads to all shearwalls based on either flexible or rigid diaphragm assumptions (step 13 in Fig 2)
3. Add reinforcement studs (multiple studs) around openings and where required based on lateral loads on shearwalls (step 14 in Fig 2)
4. Design the reinforcement studs against bending, buckling and compression (step 15 in Fig 2)
5. Calculate the tensile forces between floor levels in shearwall chords. (step 16 in Fig 2?)
6. Calculate the fastener capacity between sheathings and framing to calculate the maximum fastener distance (step 17 in Fig 2)
7. Check if friction is exceeded for non-accessible shearwalls - if that is the case - Assume the wall not to take up any shear loads (step 18 +19 in Fig 2). If the check (either 18 or 20) shows that a wall cannot be used, the program goes to 19 to "remove" from shear walls (walls that can take up horizontal load)
8. Check if there are any tensile forces between floor levels that needs handling in non-accessible walls - if that is the case - Assume the wall not to take up any shearwalls (steps 19, 20 in Fig 2)
9. Check for loop exit based on previous iteration. (step 21 in Fig 2) Here we preferably check that there are no changes of shearwalls and more preferred that the maximum change of lateral load for a shearwall is less than 0.1 % of the corresponding load.

If not fulfilled go to step 13 and perform a new iteration, with corrected stiffness based on actual nailing pattern and reinforcement stud geometry.

If fulfilled, the second iteration loop 11-21 has been successfully finalized and the software will then exit the second loop and go to step 22, where a final check of horizontal deformations is done.

It is to be noted that both the Flexible Diaphragm and Rigid Diaphragm methods serve the purpose of assigning lateral loads to shear walls, ensuring structural stability and compliance with deformation criteria. Flexible Diaphragms distribute loads based on tributary lengths of shearlines and shearwalls relative stiffness within a shearline. Rigid Diaphragms distributes loads assuming diaphragms behave as rigid planes. Selecting between these methods depends on the building system. In practice, it is possible to use both methods in design process ensure robust and compliant structural designs.

Regarding reinforcement Stud Design it is preferred to base that as stated below:
1. Initialization and Data Retrieval
   ∘ Iterate Through Studpacks:
      For each studpack in the input DataFrame, retrieve associated wall properties and load parameters.
2. Load Calculations
   ∘ Assign Wind Form Factors and Materials:
      Differentiate between exterior and interior walls to apply appropriate wind form factors and select corresponding materials.
3. Wind Load Computation
   ∘ Calculate Wind Pressures:
      Utilize wind velocity and terrain type to determine characteristic wind loads acting on the studpacks.
   ∘ Compute Applied Forces and Moments:
      Derive vertical and horizontal loads, along with bending moments, based on wind pressures and structural dimensions.
4. Utilization Factor Assessment and Optimization
   ∘ Evaluate Structural Capacities:
      For each load case (buckling, bearing, bending), calculate the maximum allowable forces and moments using structural formulas.
   ∘ Iterative Stud Quantity Adjustment:
      Increment the number of studs in the studpack until the utilization factors for all load cases are ≤1, ensuring structural adequacy. Methodology similar to Table 10.
5. Configuration Update
   ∘ Assign Optimal Dimensions and Counts:
      Update the studpack DataFrame with the selected dimensions, number of studs, and governing design criteria based on the optimization process.
6. Output Generation
   ∘ Return Enhanced DataFrame:
      Provide the updated studpacks DataFrame, now containing optimized design parameters for each studpack.

Regarding Shearwall Fastener Pattern Design Design it is preferred to base that as stated below:
1. Initialization of Material Properties and Parameters
   ∘ Retrieve Material Properties:
      Extract material properties such as densities thicknesses for exterior and interior walls.
2. Shear Capacity Calculation for Sheathing Connections
   ∘ Determine Sheathing Presence:
      Check if sheathing exists on the inside, outside, or both sides of the exterior walls.
   ∘ Calculate Shear Capacities
      Compute the shear capacities based on sheathing type, thickness, fastener specifications, and material properties. Methodology based on EN 1995-1-1
3. Iterative Assessment and Fastener Distance Determination
   ∘ Loop Through Each Shearwall:
      a) Identify Wall Type:
         Determine if the current shearwall is exterior or interior.
      b) Select Appropriate Shear Capacities:
         Based on sheathing presence and wall type, select the relevant shear capacities for further calculations.
      c) Calculate Maximum Allowed Fastener Distance:
         Using shear capacities and design line shear values, compute the maximum permissible distance between fasteners.
      d) Determine Fastener Spacing (s):
         Select the largest fastener spacing from predefined lists that is less than the maximum spacing.
      e) Validate Fastener Spacing:
         Ensure the chosen fastener spacing meets minimum requirements based on fastener type and their specifications.
4. Update Wall Data with Fastener Information
   ∘ Assign Fastener Distances:
      Update the walls DataFrame with the determined fastener distances and calculate utilization factors to indicate the efficiency of the spacing.

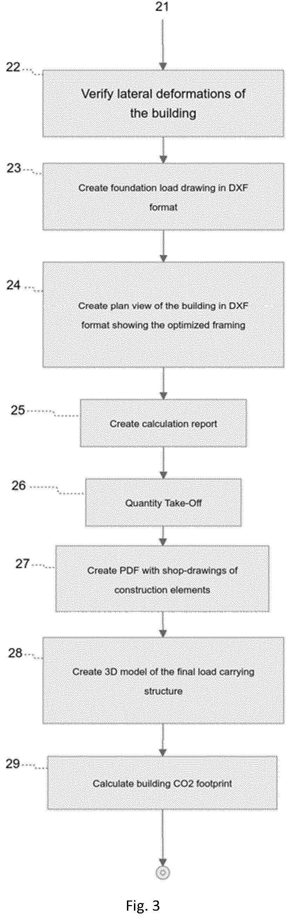

Throughout the calculation process, preferably most, more preferred all, collected data is used to visualize the results, as indicated in steps 23 to 29 in Fig. 3. Not relying on third-party services - the amount of data can be used for many purposes. It is possible to automatically generate 3D-models, quantity take-offs reports, climate data calculations, load-plan generation, report generation and so on.

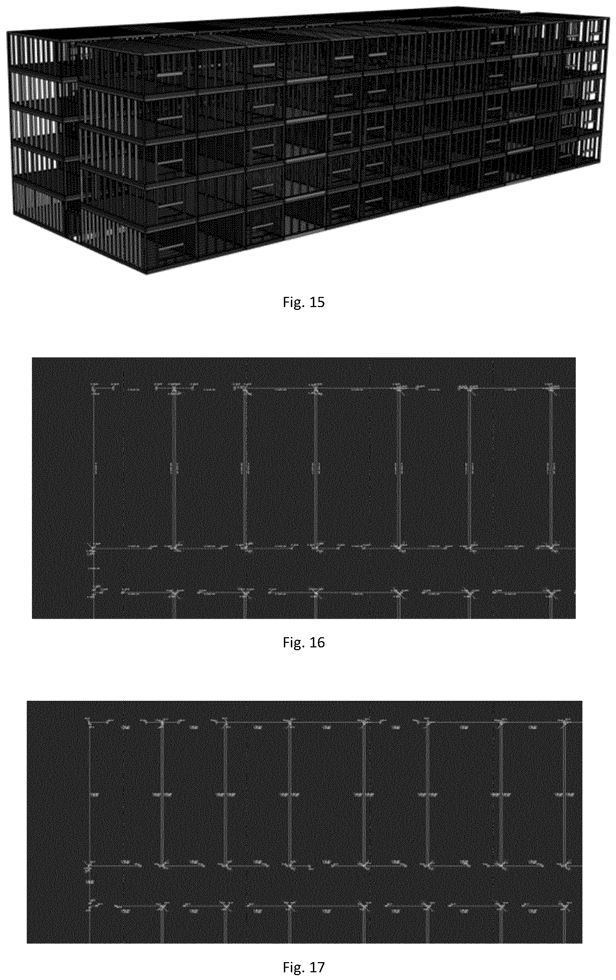

According to a preferred function of the method when iterating through the optimized data structures of walls, floors, ceilings and reinforcement studs the results are visualized to the user. Since the utilization ratio for each construction part is calculated, this can be extracted and visualized, suitably mapped to a color to display the utilization ratio within a 3D-model, as shown in Fig. 15. The model itself may be generated using the Python library pyvista, and converted to a html-file, available to display using a browser.

Through the usage of another python library, ezdxf, the results of the calculations can be visualized in DXF-files, as indicated in steps 23 and 24 of Fig. 3. Figure 16 and Figure 17 shows a zoomed in view of the DXF-file, where Figure 16 indicates the optimized wall framing and Figure 17 shows the foundation loads.

As indicated in steps 26 and 29 in Fig 3 reports with detailed required material quantities and calculations on the climate data for the building can be generated from the calculated data. Table 11 shows the total length of wall framing material, and Table 12shows the summed CO2e of the entire building, utilizating the public API for climate database from Boverket. Table 13 shows geometric area calculations, providing insights on the habitable area ratio.

**Table 11: Quantity take-off for wall framing**

| **Material** | **Dimensions (mm)** | **Total length (m)** |
|---|---|---|
| C24 | 45×195 | 64.0 |
| C24 | 45×95 | 27925.725 |
| GL30c | 115×270 | 30.84 |
| GL30c | 90×180 | 126.06 |
| GL30h | 45×195 | 5535.275 |

**Table 12: Summary of CO2e for building framing**

| **Summary of CO2e:** | | |
|---|---|---|
| **Label** | **Co2e** | **Unit** |
| Total CO2e | 469516.25 | kg |
| CO2e/m² | 72.29 | kg/m² |
| CO2e walls | 162738.73 | kg |
| CO2e floors | 193495.92 | kg |
| CO2e ceilings | 113281.6 | kg |
| CO2e/m wall | 42.56 | kg/m |
| CO2e/m² floor | 29.79 | kg/m² |
| CO2e/m² ceiling | 17.44 | kg/m² |

**Table 13: Summary of area calculations**

| **Summary of area:** | | |
|---|---|---|
| **Label** | **Area** | **Unit** |
| Gross area | 6606.94 | m² |
| Habitable area | 5222.67 | m² |
| Habitable area ratio | 79.05 | % |

The software can automatically generate load plans for all structural elements-including walls, reinforcement studs, and columns-covering deadloads, live loads, snow loads, and lateral loads. Each wall may be assigned line loads in vertical, lateral, and longitudinal directions. These load plans are preferably exported as standardized DXF drawings, ensuring consistency and eliminating manual discrepancies. Additionally, the software may produce supplementary plans detailing optimized wall types, center distances, shear wall fastener distances, and reinforcement stud placements. This automation may ensure accurate and consistent load plans, facilitating efficient communication and coordination among stakeholders such as structural engineers, CAD modelers, and architects.

The developed Python-based workflow for automated structural design and optimization of buildings offers significant advantages in terms of time efficiency and material optimization. By automating calculations and iterations, the system reduces the time required for traditional hand calculations from weeks to mere minutes. Specifically, tasks such as geometry setup, model configuration, and result generation are streamlined, enabling rapid assessment and decision-making. This efficiency not only accelerates project timelines but also enhances material utilization ratios, leading to cost savings and reduced environmental impact. Benefits that may be achieved by the method are:
∘ Time Savings: The workflow transforms a multi-week process into a streamlined operation where pressing 'Run' delivers results in approximately one minute.
∘ Material Efficiency: Optimized material usage ensures minimal waste and cost-effective construction.
∘ Flexibility: Capable of handling various building sizes, materials, and compliance with local codes, making it adaptable to diverse project requirements.

To further enhance the capabilities and applicability of the method, several further improvements and extensions may be added:
∘ Integration with Updated Code Versions: Ensuring compatibility with the latest building codes and standards will maintain the system's relevance and compliance across different regions.
∘ More Building Systems: Introducing more building system options will create more opportunities.
∘ Insight Generation: Future versions could include analytical insights, such as "Changing from a C24 sole plate to LVL reduces the number of studs by 32%," providing users with actionable data to inform design decisions.
∘ Expanded Material Libraries: Adding a broader range of materials and their properties will increase the system's versatility and applicability to various construction types.
∘ User Interface Enhancements: Developing more intuitive and feature-rich UI elements will improve user experience and accessibility, allowing for easier manipulation of design parameters and visualization of results.
∘ Automated Reporting: Enhancing the report generation feature to include more detailed analyses and customizable templates can provide users with comprehensive documentation tailored to specific project needs.
∘ Additional calculations: The code currently lacks fire and acoustic design checks, which may be dimensioning for the structural system.

In summary, the automated structural design and optimization method may deliver substantial benefits in efficiency and material optimization while maintaining high standards of compliance and flexibility. Future enhancements may further expand its capabilities. By continuously integrating new features and improving existing functionalities, the workflow is well-positioned to continue to drive innovation in building design and engineering.

The skilled person within the field understands that the above-mentioned example is not limiting the scope of the claims, but indeed that there exist evident various modifications that may fulfil basic functionality of the method. For example, it is evident that visualization may be achieved in various other manners than 3D visualization, e.g. by use of excel sheet or diagrams. Furthermore, the automated retrieval of climatic loads is not confined to the specific APIs or databases mentioned. Other data sources, proprietary or public, may equally be utilized to achieve the same result. Similarly, the optimization processes described for structural components could integrate additional factors, such as seismic, acoustic or fire design criteria, without deviating from the underlying inventive principles. Additionally, while the described workflow predominantly references timber frame structures, the method is adaptable for other materials and building systems, including steel or concrete, with appropriate adjustments to material properties and calculations. Additionally, while the example provided demonstrates compliance with Eurocode standards, the method can be extended to accommodate other design standards, ensuring versatility across different regulatory frameworks. These and other evident variations lie within the scope of the claims, which aim to encompass a broad range of implementations of the disclosed method.

## Claims

1. Method of computer-aided design of construction comprising the steps of:
a) Input of building system specific data for a planned construction into a design program
b) Input of project-specific data regarding building geometry into the design program,
c) Calculation and production of visual presentation of building frame in the design program,
d) Iteration of step c) until a desired target image is achieved for the frame material of said building frame,
e) production of frame materials for the building frame and cutting lists for the frame in the design program,
**characterized by** automation in that
- step a) includes the load of wall structures, floor structures and roof structures and dead weights for each building element
- in steps c) and d) a structural analysis including load calculations and dimensioning via iterative calculations is performed to optimize said building envelope, and that said visual presentation includes visualization of utilization rates,
- in steps (c) and (d), loaded data regarding plot coordinates are used to obtain climatic loads including wind loads from an external database, and
- in steps c) and d), form factors on walls are calculated and used together with the wall geometry to produce a total wind load per floor.

2. Method according to claim 1 **characterized in that** said iteration comprises a first iteration loop where first vertical loads are handled and where a second iteration loop comprising horizontal loads is only started when a desired intermediate target image is reached for the vertical loads.

3. Method according to claim 1-2, **characterized in that** said collected climatic loads include snow loads and/or seismic loads and preferably that geometric data for roofs are used to identify snow pockets and calculate snow loads with the aid of the design program.

4. Method according to claims 1-3, **characterized in that** said optimization of building frame includes optimization of wall and beam geometries, connector spacing and material thicknesses.

5. Method according to claims 1-4, **characterized in that** said load calculation is done for each wall, giving a line load or point loads per structural element,

6. Method according to claims 1-5, **characterized in that** said desired target image is fulfilled **in that** a subsequent iteration does not provide any improvement and preferably in combination with that each subsequent iteration comprises a stepwise change of some parameter of said building system specific data

7. Method according to claim 6, **characterized in that** in step a) a plurality of alternative variants of said building system specific data are input and that the variant is selected whose utilization rate is closest to 100% for the frame material.

8. Method according to claims 6-7, **characterized in that** said iteration comprises selecting optimal dimensions of wall and floor joist materials based on said selection of said frame materials.

9. Method according to claim 8, **characterized in that** said framing material relates to joist framing and said iteration comprises finding center distances between joists and/or said iteration relates to framing with load-bearing slabs and is based on finding thickness of slabs that meet said utilization ratio and/or said iteration relates to a column-beam system and is based on finding cross-sectional dimensions of columns that meet said utilization ratio.

10. Method according to any of claims 1-9, **characterized in that** in said load calculations equivalent horizontal forces are calculated based on skew, wherein preferably said equivalent horizontal forces are added to existing wind load dependent horizontal forces and/or seismic loads.

11. Method according to any one of claims 1-10, **characterized in that** said dimensioning when dimensioning the horizontal load bearing system is done iteratively by distributing horizontal loads per floor level to wall lines based on the respective wall line's contributing length or stiffness and position, depending on the selection of said building system specific data.

12. Method according to claim 10, **characterized in that** said distribution of load to each wall belonging to a wall line is based on the assumption of equal deformation, wherein preferably said load is distributed based on each wall with respect to wall geometry, wall material, panel material and connectors within a line being deformed equally, wherein more preferably said load per wall is accumulated downwards to underlying walls all the way down to the foundation.

13. Method according to any one of claims 9-12, **characterized in that** the joists are placed around openings and at each end of each shear wall and are designed for buckling, bending and bearing pressure.

14. Method according to any of claims 10-13, **characterized in that** tension anchorage forces between floor levels and down to the foundation are calculated and/or tie capacities are calculated based on ties, frame and slab to select a center distance of ties for each shear wall, preferably based on connector spacing, reinforcement rules and eccentricities, the load distribution in the building is iterated until convergence is reached.

15. Method according to any of the requirements 1 -14, **characterized in that** material mixing is used to calculate the total climate load of the building, preferably by retrieving data from database, more preferably public database, e.g. Boverket's API.

## Amended claims

### Amended claims in accordance with Rule 137(2) EPC.

1. Method of computer-aided design of construction comprising the steps of:
a) Input of building system specific data for a planned construction into a design program
b) Input of project-specific data regarding building geometry into the design program,
c) Calculation and production of visual presentation of building frame in the design program,
d) Iteration of step c) until a desired target image is achieved for the frame material of said building frame,
e) production of frame materials for the building frame and cutting lists for the frame in the design program,
**characterized by** automation in that
- step a) includes the load of wall structures, floor structures and roof structures and dead weights for each building element
- in steps c) and d) a structural analysis including load calculations and dimensioning via iterative calculations is performed to optimize said building envelope, and that said visual presentation includes visualization of utilization rates,
- in steps (c) and (d), loaded data regarding plot coordinates are used to obtain climatic loads including wind loads from an external database, and
- in steps c) and d), form factors on walls are calculated and used together with the wall geometry to produce a total wind load per floor, wherein
- said iteration in step d comprises a first iteration loop where first vertical loads are handled and where a second iteration loop comprising horizontal loads is only started when a desired intermediate target image is reached for the vertical loads.

2. Method according to claim 1, **characterized in that** said collected climatic loads include snow loads and/or seismic loads and preferably that geometric data for roofs are used to identify snow pockets and calculate snow loads with the aid of the design program.

3. Method according to claims 1-2, **characterized in that** said optimization of building frame includes optimization of wall and beam geometries, connector spacing and material thicknesses.

4. Method according to claims 1-3, **characterized in that** said load calculation is done for each wall, giving a line load or point loads per structural element,

5. Method according to claims 1-4, **characterized in that** said desired target image is fulfilled **in that** a subsequent iteration does not provide any improvement and preferably in combination with that each subsequent iteration comprises a stepwise change of some parameter of said building system specific data

6. Method according to claim 5, **characterized in that** in step a) a plurality of alternative variants of said building system specific data are input and that the variant is selected whose utilization rate is closest to 100% for the frame material.

7. Method according to claims 5-6, **characterized in that** said iteration comprises selecting optimal dimensions of wall and floor joist materials based on said selection of said frame materials.

8. Method according to claim 7, **characterized in that** said framing material relates to joist framing and said iteration comprises finding center distances between joists and/or said iteration relates to framing with load-bearing slabs and is based on finding thickness of slabs that meet said utilization ratio and/or said iteration relates to a column-beam system and is based on finding cross-sectional dimensions of columns that meet said utilization ratio.

9. Method according to any of claims 1-9, **characterized in that** in said load calculations equivalent horizontal forces are calculated based on skew, wherein preferably said equivalent horizontal forces are added to existing wind load dependent horizontal forces and/or seismic loads.

10. Method according to any one of claims 1-9, **characterized in that** said dimensioning when dimensioning the horizontal load bearing system is done iteratively by distributing horizontal loads per floor level to wall lines based on the respective wall line's contributing length or stiffness and position, depending on the selection of said building system specific data.

11. Method according to claim 9, **characterized in that** said distribution of load to each wall belonging to a wall line is based on the assumption of equal deformation, wherein preferably said load is distributed based on each wall with respect to wall geometry, wall material, panel material and connectors within a line being deformed equally, wherein more preferably said load per wall is accumulated downwards to underlying walls all the way down to the foundation.

12. Method according to any one of claims 8-11, **characterized in that** the joists are placed around openings and at each end of each shear wall and are designed for buckling, bending and bearing pressure.

13. Method according to any of claims 9-12, **characterized in that** tension anchorage forces between floor levels and down to the foundation are calculated and/or tie capacities are calculated based on ties, frame and slab to select a center distance of ties for each shear wall, preferably based on connector spacing, reinforcement rules and eccentricities, the load distribution in the building is iterated until convergence is reached.

14. Method according to any of the requirements 1 -13, **characterized in that** material mixing is used to calculate the total climate load of the building, preferably by retrieving data from database, more preferably public database, e.g. Boverket's API.
